Europäisches Patentamt

European Patent Office

Office européen des brevets

(19)

(11) Veröffentlichungsnummer: **0 059 928**
**A1**

(12) # EUROPÄISCHE PATENTANMELDUNG

(21) Anmeldenummer: **82101613.6**

(22) Anmeldetag: **03.03.82**

(51) Int. Cl.³: **B 41 F 31/08**

(30) Priorität: **07.03.81 DE 3108682**
**02.06.81 DE 3121821**

(43) Veröffentlichungstag der Anmeldung:
**15.09.82 Patentblatt 82/37**

(84) Benannte Vertragsstaaten:
**AT BE CH DE FR GB IT LI NL SE**

(71) Anmelder: **Ludwig Schwerdtel GmbH.**
**Boschstrasse 8**
**D-8047 Karlsfeld(DE)**

(72) Erfinder: **Lang, Hans-Jörg**
**Oberfeldring 9**
**D-8065 Eisenhofen(DE)**

(74) Vertreter: **Rau, Manfred, Dr. Dipl.-Ing.**
**Postfach 91 04 80 Lange Zeile 30**
**D-8500 Nürnberg 91(DE)**

(54) Vorrichtung zur Entleerung von insbesondere pasteuse Massen enthaltenden zylindrischen Behältern.

(57) Eine Vorrichtung zur Entleerung von pasteuse Massen enthaltenden zylindrischen Behältern (21) weist eine im Querschnitt dem Behälter (21) angepaßte, an ihrem Außenumfang mit einem an die Innenwand des Behälters (21) anlegbaren Dichtungs-Ring (32, 32') versehene, mit Druckkraft beaufschlagbare Dichtungsplatte (29') auf, die mit einer Entleerungsöffnung versehen ist.

Um mit geringem konstruktivem Aufwand eine für die zu entleerenden Massen schonende Entleerung von nichtdruckfesten Behältern zu ermöglichen, wobei gleichzeitig der erforderliche Reinigungsaufwand gering werden soll, ist eine gasdicht mit einer Aufnahmeplatte (1) für den Behälter (21) verbindbare, den Behälter (21) überdeckende, druckfeste Glocke (3) vorgesehen, ist weiterhin ein aus der Glocke (3) herausgeführtes Entleerungsrohr (25') vorgesehen, auf dem die Dichtplatte (29') gasdicht abgedichtet axial verschiebbar angeordnet ist, und führt in den Innenraum (17) von Glocke (3) und Aufnahmeplatte (1) ein Anschluß für ein Druckmedium.

./...

EP 0 059 928 A1

FIG. 3

"Vorrichtung zur Entleerung von insbesondere
pasteuse Massen enthaltenden zylindrischen Behältern"

------------------------------------------------------------

Die Erfindung betrifft eine Vorrichtung nach dem Oberbegriff des Patentanspruches 1.

Das Entleeren von pasteusen, also hochviskosen Massen,
beispielsweise Druckfarben, aus zylindrischen Behältern
bereitet in der Praxis erhebliche Probleme. Vorrichtungen der gattungsgemäßen Art weisen eine Dichtplatte auf,
die von oben auf die in dem geöffneten Behälter befindliche Masse aufgesetzt wird, und die dann mittels hydraulisch beaufschlagbarer Arbeitszylinder nach unten
in den Behälter hineingedrückt wird. Hierbei wird
dann die pasteuse Masse durch eine Entleerungs-Öffnung
in der Dichtplatte herausgedrückt. Diese Art der Entleerung von zylindrischen Behältern erfordert den Einsatz von druckfesten Behältern, was in der Praxis nur
selten möglich ist.

Zur Vermeidung dieser Probleme ist es weiterhin bekanntgeworden, an einer solchen Dichtplatte auf deren Oberalso Außenseite eine Kolben-Förderpumpe anzubringen,
deren Kolben durch eine entsprechende Entleerungs-
Öffnung bis in die im Behälter befindliche Masse eintauchen kann. Durch Beaufschlagung der Dichtplatte mit relativ geringen Kräften wird die Masse auf der
Saugseite der Pumpe so weit unter Druck gesetzt, daß
sie den Kolben umströmt und dann auf der Druckseite
der Pumpe mit hohem Druck ausgefördert werden kann.
Diese Vorrichtungen sind konstruktiv sehr aufwendig
und erfordern einen erheblichen Reinigungsaufwand.
Des weiteren ist für viele pasteuse Massen die Beaufschlagung mit hohen mechanischen Quetsch- bzw.
Scher-Kräften durch die Pumpe nachteilig.

Der Erfindung liegt daher die Aufgabe zugrunde, eine
Vorrichtung der gattungsgemäßen Art so auszugestalten,
daß mit geringem konstruktivem Aufwand eine für die
zu entleerenden Massen schonende Entleerung von nichtdruckfesten Behältern möglich ist, wobei gleichzeitig
der Reinigungsaufwand gering sein soll.

Diese Aufgabe wird erfindungsgemäß durch die kennzeichnenden Merkmale des Anspruches 1 gelöst. Hierdurch wird erreicht, daß der Druck im Inneren des
Behälters und von außen gleich ist, so daß ganz normale
nichtdruckfeste Behälter eingesetzt werden können. Der
Förderdruck kann also ausschließlich nach der Materialbeschaffenheit, d.h. insbesondere nach der Viskosität
der zu fördernden bzw. entleerenden Massen gewählt werden. Bei einem Wechsel der Masse muß nur die Unterseite
der Dichtplatte und der entsprechende Teil des Entleerungs-
rohres gereinigt werden, was sehr einfach ist. Die Entnahme eines entleerten Behälters und der Einsatz eines
neuen Behälters ist sehr einfach möglich. Mit der Vorrichtung können in gleicher Weise niedrigviskose Massen,
also flüssige Massen, gefördert werden. Auch wenn es die
Handhabung erleichtert, ist es naturgemäß nicht zwingend
erforderlich, daß die Trennebene zwischen dem Unterteil
(Aufnahmeplatte) und dem Oberteil (Glocke) in der Ebene
des Bodens des Behälters liegt; insbesondere bei Einsatz kleinerer Behälter kann selbstverständlich das Unterteil auch weiter hochgezogen sein und den Behälter teilweise oder ganz aufnehmen. Die Glocke wird dann entsprechend verkürzt.

Die Handhabung und Reinigung wird durch die Maßnahmen nach den Ansprüchen 2 und 3 besonders vereinfacht, während durch die Maßnahmen nach Anspruch 4 sichergestellt wird, daß eine Druckbeaufschlagung nur erfolgen kann, wenn die Glocke rundum mit der Aufnahmeplatte fest verriegelt ist.

Die erfindungsgemäße Ausgestaltung ermöglicht die Weiterbildung nach Anspruch 5, wodurch ein mobiler Einsatz innerhalb eines Betriebes möglich ist, die erfindungsgemäße Vorrichtung braucht also nicht stationär zu sein.

Die Ansprüche 6 und 7 geben alternative Anordnungen für das Entleerungsrohr an.

Es kann sein, daß Druckgas in den Behälter gelangt. In diesem Fall würde die von außen auf die Dichtplatte aufgebrachte Druckkraft nicht mehr ausreichen, um das Auspressen der pasteusen Masse sicherzustellen. Für einen solchen Fall sind die Maßnahmen nach Anspruch 8 in vorteilhafter Weise einsetzbar. Diese Arbeitszylinder bringen nur eine bezogen auf die Gesamtauspreßkraft kleine Zusatzkraft auf, die im Verhältnis zur Gesamtkraft um mindestens eine Zehnerpotenz kleiner ist, so daß die grundsätzlichen durch die Erfindung gegebenen Vorteile nicht nennenswert beeinträchtigt werden.

Um auf jeden Fall - auch dann wenn die zusätzlichen Arbeitszylinder vorgesehen sind - ein Ausfahren der Dichtplatte aus dem entleerten Behälter sicherzustellen, sind die Maßnahmen nach Anspruch 9 vorgesehen.

Weitere Vorteile und Merkmale der Erfindung ergeben sich aus der Beschreibung von Ausführungsbeispielen anhand der Zeichnung. Es zeigt

Fig. 1 eine Vorrichtung gemäß der Erfindung im vertikalen Mittelschnitt,

Fig. 2 eine abgewandelte Ausführungsform der Erfindung im vertikalen Mittelschnitt,

Fig. 3 eine weitere Abwandlung der Erfindung im vertikalen Mittelschnitt und

Fig. 4 ein Belüftungsventil.

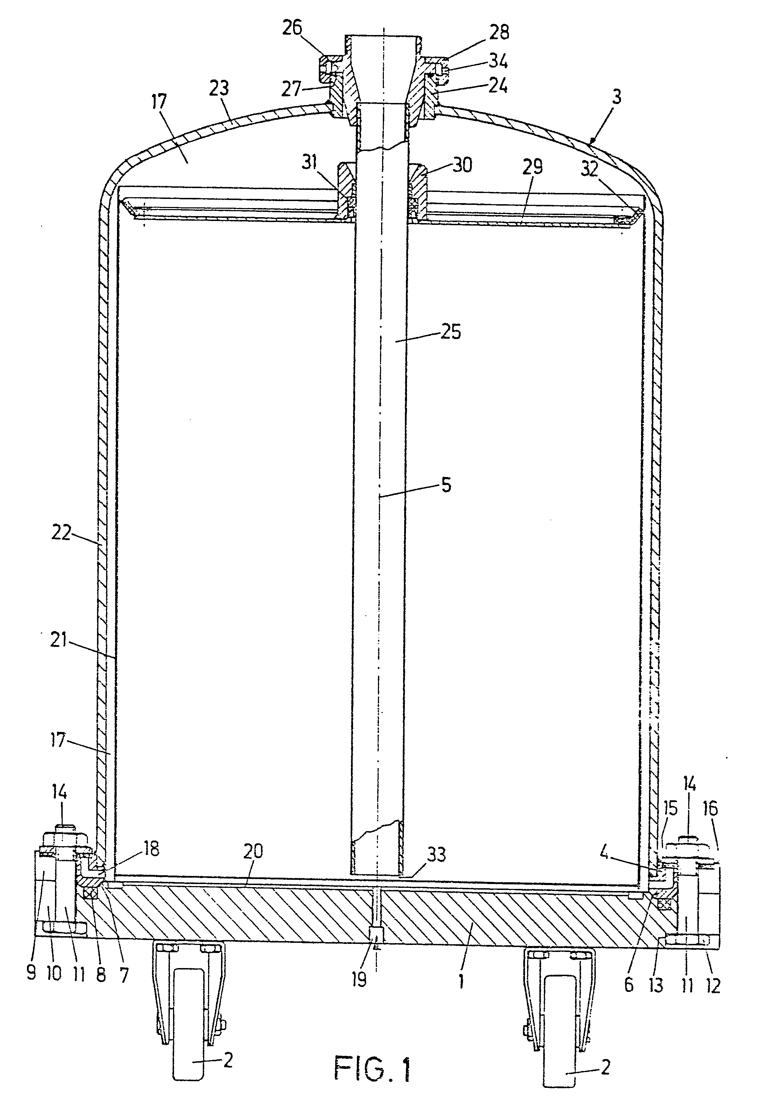

Die in Fig. 1 dargestellte Vorrichtung weist eine sehr stabile Aufnahmeplatte 1 auf, an deren Unterseite Laufräder 2 angebracht sind, um die Gesamtvorrichtung innerhalb eines Betriebes leicht transportieren zu können. Weiterhin ist eine druckfeste Glocke 3 vorgesehen, die auf der Oberseite der
Aufnahmeplatte 1 lösbar befestigt werden kann. Sie
weist an ihrem unteren umlaufenden Rand, also an ihrer
offenen Seite, einen nach außen vorspringenden Befestigungs-Flansch 4 auf, der mit einem in Richtung
der Mittel-Längsachse 5 nach unten vorspringenden
ringförmigen Zentrierbund 6 versehen ist. Dieser Zentrierbund 6 greift in eine entsprechende Zentriernut 7
in der Oberseite der Aufnahmeplatte 1 ein, wodurch
die Glocke 3 in radialer Richtung, also relativ zur
Aufnahmeplatte 1, verschiebefest festgelegt wird.
In der Zentriernut 7 ist eine Dichtung 8 angeordnet,
durch die gleichzeitig der Anlagebereich zwischen
der Glocke 3 bzw. dem Flansch 4 einerseits und der
Aufnahmeplatte 1 andererseits gasdicht gegen hohe
Drücke abgedichtet wird.

Der Flansch 4 und in gleicher Weise der zugeordnete
Rand der Aufnahmeplatte 1 weisen radial nach außen
offene Ausnehmungen 9, lo auf, in die von außen Zuganker 11 eingeschoben werden können, die mit ihrem
jeweiligen Kopf 12 in einer im Querschnitt angepaßten
Versenkung 13 im Bereich der Unterseite der Aufnahmeplatte 1 drehfest und axial fest angeordnet sind. Von
oben her wird jeweils eine Gewindemutter 14 gegen
die Oberseite des Flansches 4 geschraubt, wodurch die
feste Verbindung zwischen der Glocke 3 und der Aufnahmeplatte 1 hergestellt wird. Zwischen dem Flansch 4
und der jeweiligen Gewindemutter 14 sind eine Beilagscheibe 15 und eine ringscheibenförmige Dichtung 16
angeordnet, wobei die Beilagscheibe 15 gegen die
Gewindemutter 14 und die Dichtung 16 gegen die Oberseite des Flansches 4 anliegt. Unter der Dichtung 16 endet ein in den Innenraum 17 der Glocke 3 führender Sicherheits-Kanal 18. Durch diese Maßnahme wird sichergestellt, daß dann, wenn irgendein Zuganker 11 nicht mittels der Gewindemutter 14 fest verspannt ist, Druckluft aus dem Innenraum 17 nach außen entweichen kann. Hierdurch wird also ein Sicherheits-Verschluß geschaffen, der einen Druckaufbau im Innenraum 17 der Glocke 3 erst erlaubt, wenn die Glocke 3 mit der Aufnahmeplatte 1 rundum fest verbunden ist.

In der Aufnahmeplatte 1 ist ein Druckluftanschluß 19 ausgebildet, der in den Innenraum 17 einmündet. Von dieser Einmündestelle führt mindestens ein radialer Kanal 20 bis zur Glocke 3, so daß sichergestellt ist, daß über den Druckluft-Anschluß 19 von außen zugeführte Druckluft unter den Boden eines im Innenraum 17 befindlichen Behälters 21 hindurch frei in den verbleibenden Innenraum 17 strömen kann.

Da derartige Behälter 21 in der Regel zylindrisch ausgebildet sind, besteht die Glocke 3 aus einer zylindrischen Wand 22 und einem oberen, nach oben gewölbten, einstückig mit der Wand ausgebildeten Deckel 23. Der Innendurchmesser und die innere freie Höhe der Glocke 3 im Bereich ihrer Wand 22 sind derart gewählt, daß der größte aufzunehmende Behälter 21 mit nur geringem Spiel unter die Glocke 3 paßt, damit möglichst wenig mit Druckluft zu füllender freier Innenraum 17 vorhanden ist.

Konzentrisch zur Längsachse 5 ist im Deckel 23 ein Haltestutzen 24 angebracht, durch den von außen ein Entleerungs-Rohr 25 eingeführt werden kann, das mit einem Anlage- und Dichtungs-Flansch 26 auf dem Haltestutzen 24 unter Zwischenlage einer Dichtung 27 aufliegt. Der Flansch 26 und damit auch das Rohr 25 werden durch eine den Flansch 26 oben übergreifende,auf ein entsprechendes Außengewinde des Haltestutzens 24 aufgeschraubte Überwurf-Mutter 28 festgelegt. Auf dem Entleerungs-Rohr 25 ist eine Dichtplatte 29 radial geführt und axial verschiebbar angeordnet, in deren zentrischer, nach oben herausragender Führungsbüchse 3o Dichtungen 31 angeordnet sind, die eine gasdichte Verbindung zwischen Entleerungs-Rohr 25 und Führungsbüchse 3o und damit der Dichtplatte 29 herstellen.

Am Außenrand der kreisförmigen Dichtungsplatte 29 ist ein Dichtungs- und Abstreif-Ring 32 befestigt, dessen Außendurchmesser gleich oder etwas größer ist als der Innendurchmesser des zylindrischen Behälters 21. Der Ring 32 ist aus steifem Material und verhältnismäßig dick, so daß er sich sehr fest gegen die Innenwand des Behälters 21 anlegt.

Die Entleerung eines mit pasteuser, also hochviskoser Masse gefüllten Behälters geht in folgender Weise vor sich: Der Behälter 21 wird auf die Aufnahmeplatte 1 gestellt; anschließend wird die Dichtplatte 29 von oben auf die in dem Behälter befindliche pasteuse Masse aufgesetzt. Dann wird die Glocke 3 auf die Aufnahmeplatte 1 gesetzt, zentriert und mittels der Zuganker 11 in der beschriebenen Weise gasdicht befestigt. Dann wird das Entleerungs-Rohr 25 von oben durch den Haltestutzen 24 in die Glocke und durch die Führungsbuchse 3o der Dichtplatte 29 geschoben, bis es mit seinem Flansch 26 auf dem Haltestutzen 24 aufliegt. Es endet dann nur wenige Millimeter oberhalb des Bodens des Behälters 21. Es wird mittels der Überwurf-Mutter 28 festgelegt und abgedichtet. Anschließend wird über den Druckluft-Anschluß 19 aus einer beliebigen - in der Regel im Betrieb vorhandenen - Druckluftquelle Druckluft in den Innenraum 17 der Glocke 3 gedrückt. Hierdurch wird die Dichtplatte 29 nach unten gedrückt und preßt das pasteuse Material durch den Spalt 33 zwischen dem Rohr 25 und dem Boden des Behälters 21 in das Rohr 25 und oben aus diesem heraus.

Für die Entleerung kleinerer Behälter kann es ausreichend sein, wenn der Sicherheitsverschluß durch ein Schraubgewinde zwischen Glocke und Aufnahmeplatte gebildet wird, wobei dann auch hier mindestens eine Entlüftungs-Öffnung oder ein entsprechender Sicherheits-kanal vorgesehen ist, der nur bei völlig verschraubtem Zustand von Glocke und Aufnahmeplatte geschlossen ist.

Im übrigen sind zweckmäßigerweise in der Überwurf-Mutter 28 auch ein oder mehrere Entlüftungsöffnungen 34 angebracht, durch die dann, wenn das Rohr 25 nicht absolut fest mit dem Deckel 23 verbunden ist, die Druckluft abströmt, so daß ein Druckbaufbau im Innenraum 17 nicht möglich ist.

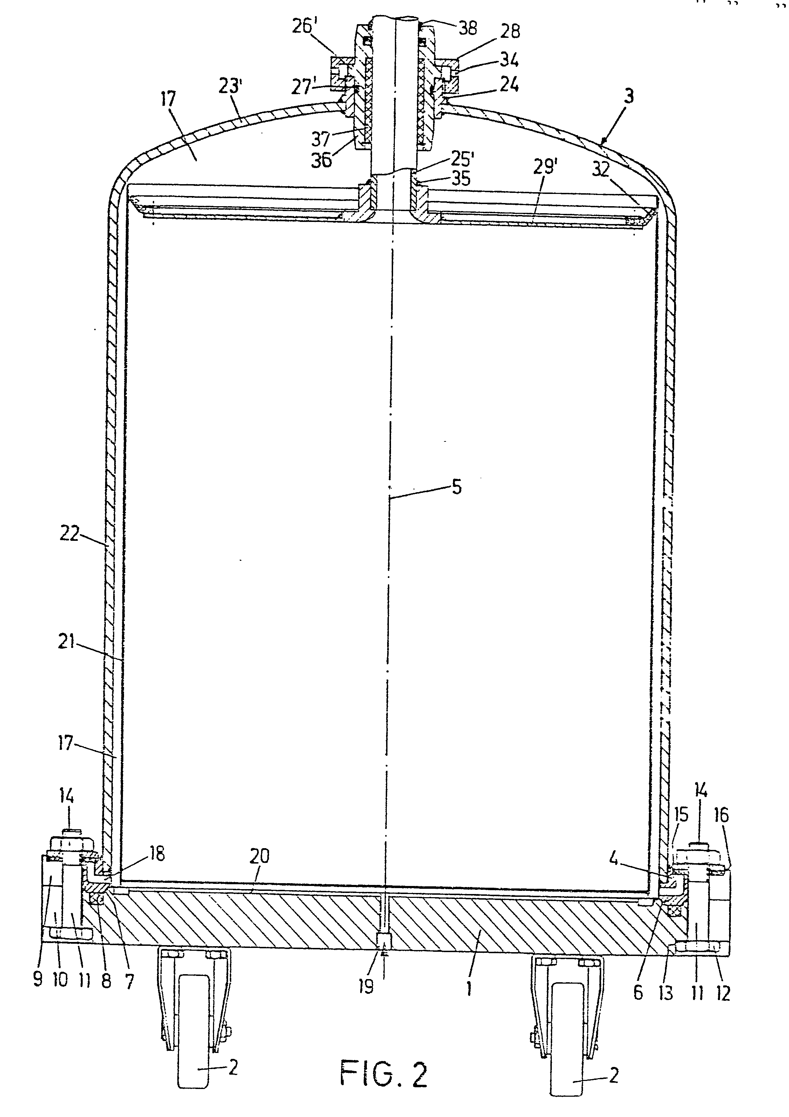

Das Ausführungsbeispiel nach Fig. 2 unterscheidet sich von dem nach Fig. 1 lediglich durch die Anordnung und Führung des Entleerungsrohres. Aus diesem Grunde sind in Fig. 2 mit dem Ausführungsbeispiel nach Fig. 1 übereinstimmende Teile mit den jeweils identischen Bezugsziffern versehen worden und werden nicht neu beschrieben. Funktionell gleichartige, konstruktiv unterschiedliche Teile werden mit der Fig. 1 entsprechenden Bezugsziffer mit einem hochgesetzten Strich versehen. Bei dem Ausführungsbeispiel nach Fig. 2 ist das Entleerungsrohr 25' fest mit der Dichtplatte 29', beispielsweise durch eine Schweißverbindung 35 verbunden. Das Entleerungsrohr 25' ist in einer Buchse 36 in Richtung seiner Mittel-Längsachse 5 verschiebbar geführt, die in dem Haltestutzen 24 des Deckels 23 mit der Überwurf- Mutter 28 fest, aber lösbar verbunden ist. Hierzu weist die Buchse 36 einen Anlage-Flansch 26' auf, der zwischen der Überwurf-Mutter 28 und dem Haltestutzen 24 eingespannt wird. Außerdem ist zwischen der Buchse 36 und dem Haltestutzen 24 mindestens eine Dichtung 27' angeordnet.

Das Entleerungsrohr 25' ist gasdicht abgedichtet in der Buchse 36 axial verschiebbar geführt. Hierzu sind in der Buchse 36 eine Stopfbuchspackung 37 als Dichtung und mindestens eine Lippendichtung 38 angeordnet, die jeweils gegen die Außenwand des Entleerungsrohrs 25' dichtend anliegen. Die Wirkungsweise unterscheidet sich von der der Vorrichtung nach Fig. 1 nur dadurch, daß das Entleerungsrohr 25' nicht in die im Behälter 21 befindliche Masse eingeführt zu werden braucht. Letzteres ist dann, wenn hochviskose Massen aus dem Behälter 21 herausgefördert werden sollen, insbesondere dann mit sehr hohem Kraftaufwand verbunden, wenn - aufgrund fortlaufenden Gebrauchs - das Entleerungsrohr 25 bereits von der vorhergehenden Entleerung eines weiteren Behälters 21 her mit dieser Masse gefüllt ist. Der kraftaufwendige Eintauchvorgang entfällt bei der Ausführung nach Fig. 2.

Durch Undichtigkeiten zwischen dem Dichtungs- und Abstreif-Ring 32 und der zugeordneten Innenwand des Behälters 21 kann es vorkommen, daß aus dem Innenraum 17 der druckfesten Glocke 3 Druckgas unter die Platte 29, also in den mit Masse gefüllten Behälter 21 gelangt. In diesem Fall wirkt dann von unten auf die Dichtplatte 29 eine größere Kraft als vom Innenraum 17 her, da im Behälter 21 auf die Dichtplatte 29 der Gasdruck dann über den vollen Innenquerschnitt des Behälters 21 wirkt, während von der Oberseite her diese Querschnittsfläche abzüglich des Außenquerschnitts des Entleerungs-Rohres 25 bzw. 25' beaufschlagt wird. Um diese dann entgegen der abwärts gerichteten Auspreßbewegung der Dichtplatte 29 wirkenden Kräfte zu kompensieren, sind parallel zur Mittel-Längsachse 5 mindestens zwei symmetrisch zu dieser angeordnete pneumatisch beaufschlagbare Arbeitszylinder 39 vorgesehen, die am Deckel 23 bzw. 23' der Glocke 3 befestigt sind und deren Kolbenstangen 4o an der Oberseite der Dichtplatte 29 bzw. 29' befestigt sind. Die Summe der mit Druckgas beaufschlagbaren Kolbenflächen in den Arbeitszylindern 39 ist größer als der Außenquerschnitt des Entleerungs-Rohres 25 bzw. 25', und zwar maximal doppelt so groß. Bevorzugt ist die Summe dieser mit Druck beaufschlagbaren Flächen um das

- 11 -

1,2-bis 1,5-fache größer als der Außenquerschnitt des Entleerungs-Rohres. Die Arbeitszylinder 39 werden durch Anschlüsse 41 mit dem gleichen Druck beaufschlagt, wie er auch durch den Druckluft-Anschluß 19 in den Innenraum 17 gegeben wird. Dadurch ist sichergestellt, daß die Dichtplatte 29 bzw. 29' von oben immer mit einer etwas größeren Kraft beaufschlagt wird, als sie im Inneren des Behälters 21 als Gegenkraft auftreten kann, wobei dieser Druckkraftüberschuß mit zunehmender Druckkraft mitsteigt. Diese zusätzliche Druckkraft dient auch zur Überwindung der Reibung zwischen Dichtung 32 und Innenwand des Behälters 21.

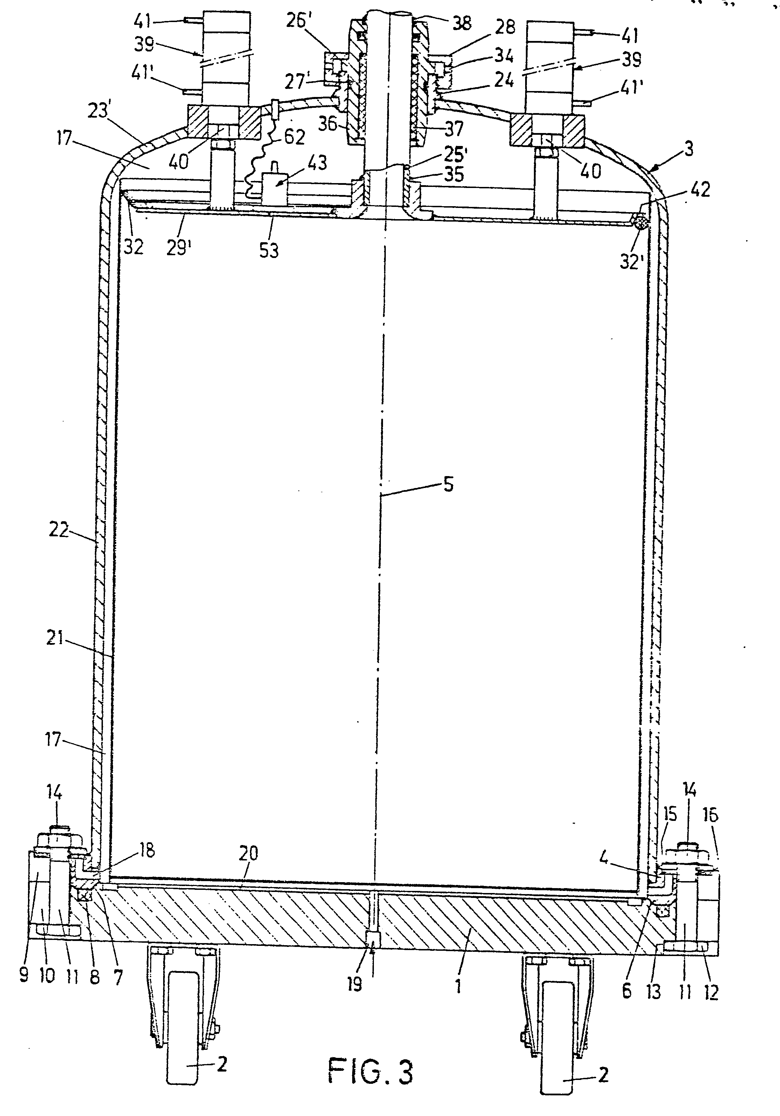

Aus Fig. 3 ist auch ersichtlich, daß alternativ zu dem Dichtungs- und Abstreif-Ring 32 auch ein sogenannter Rundschnur-Ring 32' vorgesehen sein kann. Bei Einsatz des Rundschnur-Ringes als Dichtungs-Ring 32' ist die Dichtplatte 29 bzw. 29' mit einem sich nach oben erweiternden kegelstumpfförmigen Sitz 42 versehen. Vor dem Auspressen der Masse aus dem Behälter 21 wird der Rundschnur-Ring von oben auf die im Behälter 21 befindliche Masse aufgelegt und dann die Dichtplatte 29' aufgesetzt, in der der Rundschnur-Ring sich dann selbst zentriert und gegen die Innenwand des Behälters 21 anlegt. Diese Ausgestaltung hat den Vorteil, daß beim Hochfahren der Dichtplatte 29 bzw. 29' der Rundschnur-Ring unten im Behälter 21 liegenbleibt und daher nicht noch an der Innenwand des Behälters 21 befindliche Masse nach oben abstreift und damit die Oberseite der Dichtplatte 29 bzw. 29' verschmutzt. Um die Dichtplatte 29 bzw. 29'. hochfahren zu können, werden die doppeltwirkend ausgebildeten Arbeitszylinder 39 über weitere Druckluftanschlüsse 41' mit Druckluft beaufschlagt, wodurch die Kolbenstangen 4o nach oben verfahren werden.

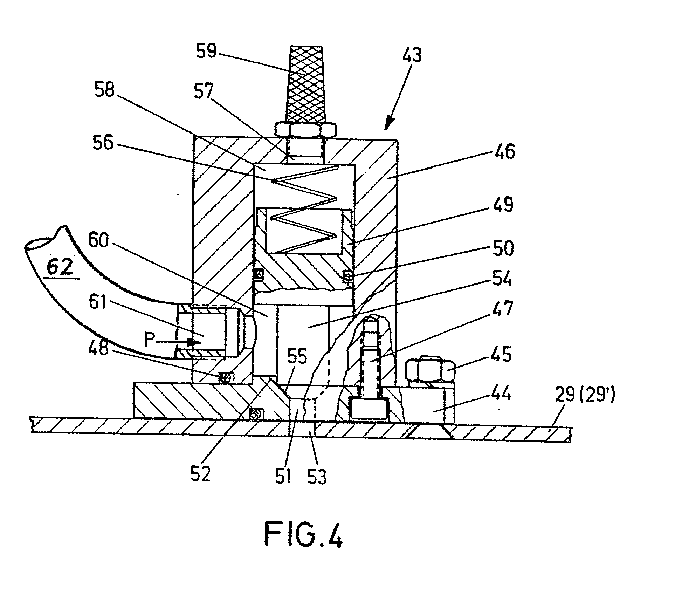

Bei der Ausgestaltung mit dem Dichtungs- und Abstreif-Ring 32 ist zum Herausfahren der Dichtplatte 29 bzw. 29' aus dem Behälter 21 ein Belüftungsventil 43 vorgesehen, das in Fig. 4 näher dargestellt ist. Es weist eine Ventilsitzplatte 44 auf, die mittels Schrauben 45 an der Dichtplatte 29 bzw. 29' befestigt ist. Auf dieser Ventilsitzplatte 44 ist ein Ventilgehäuse 46 mittels Schrauben 47 und einer Dichtung 48 gasdicht befestigt. Im Ventilgehäuse 46 ist ein Kolben 49 verschiebbar angeordnet, der mittels einer Dichtung 50 gegenüber der Innenwand des Ventilgehäuses 46 abgedichtet ist.

In der Ventilsitzplatte 44 ist eine Ventilöffnung 51 mit einem sich zum Kolben hin kegelstumpfförmig erweiternden Ventilsitz ausgebildet. Der Ventilöffnung 51 in der Ventilsitzplatte 44 ist eine entsprechende Durchlaßöffnung 53 in der Dichtplatte 29 bzw. 29' zugeordnet. An der dem Ventilsitz 52 zugeordneten Seite des Kolbens 49 ist ein zylindrischer Ventilkörper 54 mit einer dem Ventilsitz 52 angepaßten Dichtfläche 55 angeordnet.

Der Kolben 49 wird auf seiner dem Ventilkörper 54 abgewandten Seite mittels einer vorgespannten Schrauben-Druckfeder 56 belastet, so daß normalerweise der Ventilkörper 54 mit seiner Dichtfläche 55 auf den Ventilsitz 52 gepreßt wird. Außerdem ist das Ventilgehäuse 46 in diesem Bereich mit einer Verbindungsöffnung 57 versehen, so daß in der zugeordneten Ventilkammer 58 immer der Druck herrscht, der auch im Innenraum 17 der Glocke 3 herrscht. Dieser Verbindungsöffnung 57 kann ein Filter 59 vorgeordnet sein. In die auf der anderen Seite des Kolbens 49 befindliche

Ventilkammer 6o, die also vom Ventilkörper 54 durchsetzt wird, mündet ein Druckluft-Anschluß 61 ein, dem über eine flexible Druckluft-Leitung 62 Druckluft zugeleitet wird, und zwar zweckmäßigerweise mit dem gleichen Druck, wie er auch in den Innenraum 17 eingegeben wird.

Wenn im Innenraum 17 Druck herrscht, wenn also noch Masse aus dem Behälter 21 ausgepreßt wird, ist aufgrund der sich ergebenden Kräfteverhältnisse das Belüftungsventil 43 geschlossen, da der Ventilkörper 54 gegen den Ventilsitz 52 gepreßt wird.

Wenn nach dem Entleeren des Behälters 21 der Druck im Innenraum 17 und damit auch in der Ventilkammer 58 abgebaut wird, dann wird der Kolben 49 gegen die Kraft der Druckfeder 56 nach oben verschoben, wodurch der Ventilkörper 54 vom Ventilsitz 52 abgehoben wird. Es wird also dann Druckluft durch die Ventilöffnung 51 und die Durchlaßöffnung 53 ins Innere des Behälters 21 eingegeben, wodurch dann - gegebenenfalls unter entsprechender Betätigung der Arbeitszylinder 39 - die Dichtplatte 29 bzw. 29', die ja nach wie vor gegenüber der Innenwand des Behälters 21 abgedichtet ist, nach oben verfahren wird. Vorteilhaft hierbei ist, daß mit abnehmendem Druck im Innenraum 17 sich das Belüftungsventil 43 langsam öffnet und somit die Dichtplatte 29 bzw. 29' langsam nach oben bewegt.

Der Einsatz des Belüftungsventils 43 kann auch bei der Ausführung mit einem Rundschnur-Ring als Dichtungs-Ring 32' zweckmäßig sein, da - je nach auszupressender Masse - die Dichtplatten 29 bzw. 29' am Ende des Auspreßvorganges am Boden des Behälters 21 festkleben kann, so daß die Rückzugskraft der Arbeitszylinder 39 nicht ausreicht, sie anzuheben.

Patentansprüche:

1. Vorrichtung zur Entleerung von insbesondere pasteuse Massen enthaltenden zylindrischen Behältern (21), wobei eine im Querschnitt dem Behälter (21) angepaßte, an ihrem Außenumfang mit einem an die Innenwand des Behälters (21) anlegbaren Dichtungs-Ring (32) versehene, mit Druckkraft beaufschlagbare Dichtungsplatte (29) vorgesehen ist, die eine Entleerungs-öffnung aufweist, dadurch gekennzeichnet, daß eine gasdicht mit einer Aufnahmeplatte (1) für den Behälter (21) verbindbare, den Behälter (21) überdeckende, druckfeste Glocke (3) vorgesehen ist, daß ein aus der Glocke (3) abgedichtet herausgeführtes Entleerungsrohr (25, 25') vorgesehen ist, auf dem die Dichtplatte (29, 29') gasdicht abgedichtet angeordnet ist, und daß in den Innenraum (17) von Glocke (3) und Aufnahmeplatte (1) ein Anschluß für ein Druckmedium (Druckluft-Anschluß 19) führt.

2. Vorrichtung nach Patentanspruch 1, dadurch gekennzeichnet, daß das Entleerungs-Rohr (25, 25') konzentrisch zur Mittel-Längsachse (5) der Glocke (3) angeordnet ist.

3. Vorrichtung nach Patentanspruch 1 oder 2, dadurch gekennzeichnet, daß das Entleerungs-Rohr (25) lösbar und nach außen herausnehmbar an der Glocke (3) angebracht ist.

4. Vorrichtung nach einem der Patentansprüche 1 bis 3, dadurch gekennzeichnet, daß zur lösbaren Verbindung der Glocke (3) mit der Aufnahmeplatte (1) ein Sicherheitsverschluß vorgesehen ist, der nur in völlig geschlossenem Zustand mindestens eine Entlüftungs-
öffnung (Sicherheits-Kanal 18) verschließt.

5. Vorrichtung nach einem der Patentansprüche 1 bis 4,
dadurch gekennzeichnet, daß an der Aufnahmeplatte (1)
Laufräder (2) angebracht sind.

6. Vorrichtung nach Patentanspruch 1, dadurch gekennzeichnet, daß die Dichtplatte (29) auf dem Entleerungsrohr (25) axial verschiebbar angeordnet ist.

7. Vorrichtung nach Patentanspruch 1, dadurch gekennzeichnet, daß die Dichtplatte (29') am inneren Ende
des Entleerungsrohrs (25') befestigt ist, und daß das
Entleerungsrohr (25') axial verschiebbar im Deckel
(23) geführt ist.

8. Vorrichtung nach einem der Patentansprüche 1 bis 7,
dadurch gekennzeichnet, daß an der Glocke (3) mindestens ein die Dichtplatte (29') mit einer Zusatzkraft
beaufschlagender Arbeitszylinder (39) angeordnet ist.

9. Vorrichtung nach einem der Patentansprüche 1 bis 8,
dadurch gekennzeichnet, daß an der Dichtplatte (29')
ein Belüftungsventil (43) vorgesehen ist.

FIG. 1

0059928

0059928

FIG. 2

0059928

FIG.3

FIG.4

0059928

0059928

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 41 F 31/08 |
| Y | DE - C - 918 612 (NOLLE) <br><br> * Seite 1, Zeile 23 - Seite 2, Zeile 119; Figuren; Patentansprüche 1,2 * <br><br> -- | 1,2,6 | |
| Y | GB - A - 544 666 (TECALEMIT) <br><br> * Seite 1, Zeile 103 - Seite 3, Zeile 71; Figuren * <br><br> -- | 1,5 | |
| A | GB - A - 1 018 256 (KOPPERS) <br><br> * Seite 2, Zeile 31 - Seite 3, Zeile 16; Figuren 1,2 * <br><br> -- | 1,7 | RECHERCHIERTE SACHGEBIETE (Int. Cl.³) <br><br> B 41 F <br> B 67 D <br> B 05 B <br> B 05 C <br> F 16 N |
| A | DE - A - 1 966 789 (ROLAND) <br><br> * Seite 5, Zeile 1 - Seite 6, Zeile 24; Figuren 1-4 * <br><br> ------ | 9 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | |
|---|---|---|
| Recherchenort <br> Den Haag | Abschlußdatum der Recherche <br> 18-05-1982 | Prüfer <br> LONCKE |

EPA form 1503.1  06.78